# EUROPEAN PATENT SPECIFICATION

(11) **EP 0 272 077 B1**
(45) Date of publication and mention of the grant of the patent: **02.08.1995**
(21) Application number: 87311002.7
(22) Date of filing: 15.12.1987
(51) Int. Cl.: G01C 21/22, G09B 29/10

(54) **Apparatus for displaying travel path**
Vorrichtung zur Kursanzeige
Dispositif d'affichage d'un cours

(30) Priority: 15.12.1986 JP 298353/86
(43) Date of publication of application: 22.06.1988
(73) Proprietor: HONDA GIKEN KOGYO KABUSHIKI KAISHA, Minato-ku Tokyo 107 (JP)
(72) Inventor: Iihoshi, Akira, Wako-shi Saitama (JP); Nakamura, Yukinobu, Wako-shi Saitama (JP); Yasui, Shinichiro, Wako-shi Saitama (JP)
(74) Representative: Muir, Ian R.

(56) References cited:
- EP-A- 0 196 498
- WO-A-86/07143
- DE-A- 3 429 882

## Description

The present invention relates to a travel path displaying apparatus in which a current location and a path of travel of a vehicle, such as an automobile, are displayed on a display screen which has a map previously displayed thereon.

In an attempt to provide guidance to prevent a driver of a vehicle from losing his way while driving, for example in an unfamiliar place, there has been developed a travel path displaying apparatus which includes a distance detector for detecting a distance travelled, depending upon a running speed of the vehicle, and a direction detector for detecting a running direction and sizes of any changes in direction. In this known apparatus, a current location of the vehicle, in a two-dimensional coordinate system, is successively computed from the respective results of the detections effected by the above mentioned detectors. The location thus computed is stored in a memory and displayed in the form of a continuously updated series of point data on a display screen having a map including roads or the like previously displayed thereon, so that the driver may confirm the current location of his vehicle.

In such travel path displaying apparatus, it has been a practice to previously set target points, such as crossing points where the vehicle is to be turned to the right or the left, on a desired travel course from a starting point to a destination on the map, so that the vehicle may be guided in a smooth manner during travel to the destination.

In such apparatus, however, it can occur that the travel path of the vehicle, as displayed on the display screen, does not pass through the target previously set on the map, because of a difference between the shape of the roads as displayed on the map and the actual shape of the roads. In order to distinguish this case from an error condition, in which the vehicle is travelling on a path other than the desired travel path, it is desirable to continue the driving guidance on the assumption that the vehicle has passed through the target, when the detected travel path satisfies a predetermined condition.

In order to assume that the vehicle has passed through the target, it may be possible to set a circular area , of predetermined radius, around the target position which has been previously set and registered in the coordinate system and to determine whether the detected travel path of the vehicle comes into said circular area. If so, it might be decided that the vehicle has in fact passed through the target. In this case, where the decision that the vehicle has passed through the target point might be made only because the travel path has come within the predetermined area, it may be erroneously decided that the vehicle has passed through the target, particularly if roads in the area are complicated and form a plurality of nearby intersections.

WO-A-8607143 discloses a method for displaying a travel path which incorporates a program which compares the vehicle position with the intended driving route. However no definite means is disclosed to enable the vehicle to ascertain whether it has reached its target point.

In DE-A-3429882 a definite means of detecting the attainment of the target is disclosed wherein the distance of the vehicle from the target point is repeatedly calculated and the vehicle is judged to have reached the target when the distance becomes less than some set distance. However, as discussed above, this method may also erroneously decide that the vehicle has reached the target if the road pattern around the target is complicated.

EPA-0196498 discloses a method for deciding on which road on the map the vehicle is currently running involving the use of vector approximations to the roads. In order to choose the next assumed vector from a plurality of possibilities, the distance of the vehicle to the start of each vector is calculated and a vector is chosen to be the assumed road when at the nearest point of approach of the vehicle to the start of the vector, the vehicle is both closer to the start of that vector than any other, and also headed in the correct direction.

Therefore, considering the above documents, a precise decision as to whether a vehicle has passed the target is not possible.

In view of the above, it is an object of the present invention to provide a method of ascertaining the attainment of a target point set on a map in an apparatus for displaying the travel path of a body on a two dimensional coordinate system wherein it is possible to make a precise decision, at any time, as to whether the vehicle has passed through the point.

According to a first aspect of the present invention, there is provided a method of displaying the travel path of a moving body in a two dimensional coordinate system, comprising the steps of:
displaying a map in said two dimensional coordinate system;
setting at least one target point on a desired running course on the map, the or each target point having a predetermined distance associated therewith;
successively calculating the current location of the moving body in the two-dimensional coordinate system on the basis of the actually detected position of the moving body;
displaying on said map the calculated current location of the moving body;
the method further comprising determining whether the moving body has correctly passed through a target point on said desired running course by, as the moving body approaches the target point:
successively calculating the distance of the moving body from the target point;
determining the minimum distance of the body from the target point by a comparison of the successive calculated distances from the target point until the moving body begins to move away from the target point;
comparing the minimum distance of the body from the target point with said predetermined distance; and
determining that the body has passed through the target point when the determined minimum distance of the moving body from the target point is less than the predetermined distance.

According to a second aspect of the present invention, there is provided an apparatus for displaying a travel path of a moving body in a two-dimensional coordinate system, the apparatus comprising:
means for displaying a map in said two-dimensional coordinate system;
means for setting at least one target point on a desired running course on the map, the or each target point having a predetermined distance associated therewith;
means for successively calculating a current location of the moving body in the two-dimensional coordinate system on the basis of the actually detected position of the moving body;
the apparatus operating such that:
the calculated current location of the moving body is displayed on the map; and such that:
it is determined whether the moving body has correctly passed through a target point on said desired running course by, as the moving body approaches the target point:
successively calculating the distance of the moving body from the target point;
determining the minimum distance of the body from the target point by a comparison of the successive calculated distances from the target point until the moving body begins to move away from the target point;
comparing the minimum distance of the body from the target point with said predetermined distance; and
determining that the body has passed through the target point when the determined minimum distance of the moving body from the target point is less than the predetermined distance.

For a better understanding of the present invention, and to show how the same may be brought into effect, reference will now be made, by way of example, to the accompanying drawings, in which:-
Fig. 1 is a block diagram showing an embodiment of the travel path displaying apparatus according to the present invention;
Fig. 2 is a diagram showing an example of the content of a display produced by the travel path displaying apparatus;
Fig. 3 is a diagram showing an example of a desired travel path displayed on the map, having a plurality of targets set thereon;
Fig. 4 is a diagram showing an example of a detected travel path of the vehicle relative to the target set on the map.
Fig. 5 is a flow chart showing a process for deciding whether the vehicle has passed through the target, according to an embodiment of the present invention.
Fig. 6 is a diagram showing an example of a travel path of the vehicle relative to the target, in which a desired running direction at the target is also set;
Fig. 7 is a flow chart showing a process for deciding whether the vehicle has passed the target, according to a further embodiment of the present invention;
Fig. 8 is a flow chart showing a still further embodiment of the present invention;

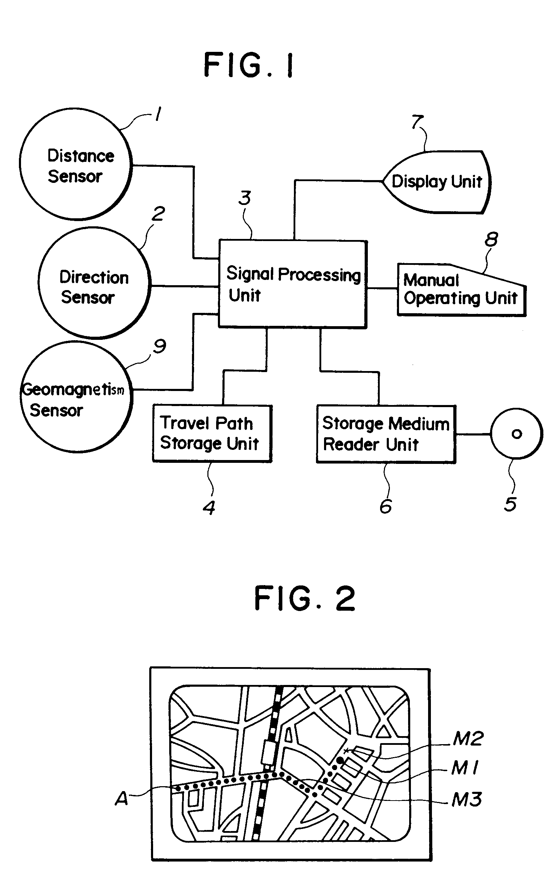

Fig. 1 shows an example of the construction of a travel path displaying apparatus according to the present invention. The apparatus has a distance sensor 1 of, for example, photoelectric, electromagnetic, or mechanical contact type, for generating pulse signals at every unit distance travelled, depending, for example, on the rotation of a wheel of the vehicle, and a direction sensor 2 for generating signals proportional to changes in the direction of travel of the vehicle. The direction sensor may, for example, consist of a gyroscope, for detecting changes in the angular velocity in the yawing direction. The apparatus also includes a processing unit 3 which counts the number of pulse signals sent from the distance sensor 1, to measure the distance travelled by the vehicle, and also determines changes in the running direction of the vehicle on the basis of the output signal from said direction sensor 2.

Thus, the signal processing unit 3 successively computes the current location of the vehicle in the two-dimensional coordinate system at every unit distance travelled by the vehicle. The signal processing unit includes a CPU, for effecting centralised control of the whole system, a programming ROM, and a controlling RAM, etc. Also provided is a travel path storing means (RAM) 4 for successively storing data concerning the constantly changing location of the vehicle in the two-dimensional coordinate system, obtained by said signal processing unit, and for holding said data as finite and continuous location data corresponding to the current location of the vehicle.

Additionally, the apparatus includes a map data storage medium 5, in which a plurality of file units of map data, relating to a plurality of areas and to a number of scales, are previously stored, and a storage medium reader unit 6 for selectively reading out the desired map file from the storage medium 5. A display unit 7 successively renews and displays the current location of the vehicle, the path of travel, the current running direction and other information on a display screen, on the basis of the location data stored in the storage unit 4.

A manual operating unit 8 is provided for inputting operation commands to the signal processing unit 3 and for effecting various operations, including selection of the map to be displayed on the display unit 7, setting of the starting point of the vehicle on the display map, setting of the target points and the destination point, changing the orientations of the displayed map and the travel path, shifting the displayed position, changing the setting of the displayed form for example by the partial enlargement of the display of the map and the travel path, selection of a reduced scale, and the like.

The apparatus also includes a geomagnetism sensor 9 for sensing the geomagnetism to detect an absolute azimuth.

In the construction described above, the selectively read out map is displayed at the set scale on the display screen of the display unit 7, while the current location in the two-dimensional coordinate system is successively computed, as the vehicle travels from the starting point set on the map, by means of the signal processing unit 3. The results of the computation are successively sent to the travel path storage unit 4, so that the content of the storage is renewed, constantly read out and sent to the display unit 7.

As shown in Fig. 2, the display unit 7 has a display mark M1 indicating the current location of the vehicle on the map displayed on the display screen, a display mark M2 indicating the direction of travel of the vehicle at the current location, and a display mark M3 indicating the travel path from the starting point to the current location. These marks indicate the running status of the vehicle. At this stage, the display of the travel path is rotated in accordance with the signal detected by the geomagnetism sensor 9, under the control of the signal processing unit 3, so that the travel path of the vehicle may be displayed on the display screen with a proper direction corresponding to the azimuth of the map displayed on the display screen.

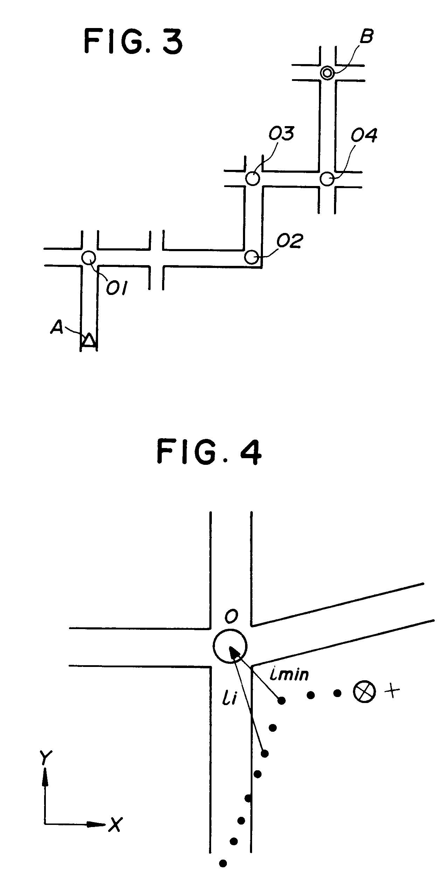

A cursor of the manual operating unit 8 can be operated to set target points O1-O4, as desired, on the desired running course from the starting point A to the destination B, as shown in Fig. 3. The data concerning the positions of the set target points O1-O4 in the two dimensional coordinate system are registered in the internal memory of the signal processing unit.

In accordance with the present invention, when the vehicle turns to the right at the crossing on the map having the target point O set thereon, as shown in Fig. 4, for example, the closest distance l min of the vehicle from the target O is computed by the signal processing unit 3 and the closet approach l min thus computed is compared with a predetermined distance K (for example, 600m). If l min < K, it is decided that the vehicle has passed through the target.

The distance li between the current location (xi,yi) of the vehicle, which constantly changes as the vehicle moves, and the registered location (xo, yo) of the target point O is successively computed, and the new data li and the old data li-l are compared with each other.

The value of li is given by the following formula:$\sqrt{\text{(xi-xo)² + (yi-yo)²}}$

As long as the relation li < li-l exists, that is, as long as the vehicle is approaching the target O, the approaching distance li is successively renewed.

Then, the relation li > li-1 comes into effect, and the shortest distance lmin is determined by the value li when the vehicle moves away from the target O.

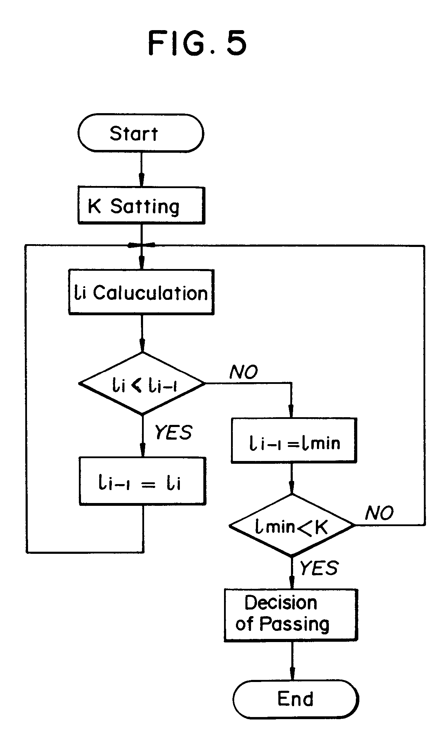

Fig. 5 is a flow chart showing the process carried out in the signal processing unit 3, to determine whether the vehicle has passed through the target.

If desired, a buzzer or a voice warning device may be provided, to inform the driver that the vehicle has passed through the target, under the control of the signal processing unit 3, when the decision of passing through the target has been made.

As described above, in the travel path displaying apparatus according to the present invention, the approaching distance li relative to the target O is constantly compared with the old data and renewed to obtain the closest approach lmin, and the decision of passing through the target is made on the basis of the shortest distance thus obtained. Accordingly, even if a crossing is located near the target O, an erroneous decision cannot occur so long as the vehicle is approaching the target O. Furthermore, because the decision of passing through the target point is made depending upon the approaching distance of the vehicle relative to the target point O, is it possible to make that decision independently of the direction in which the vehicle enters into the target area.

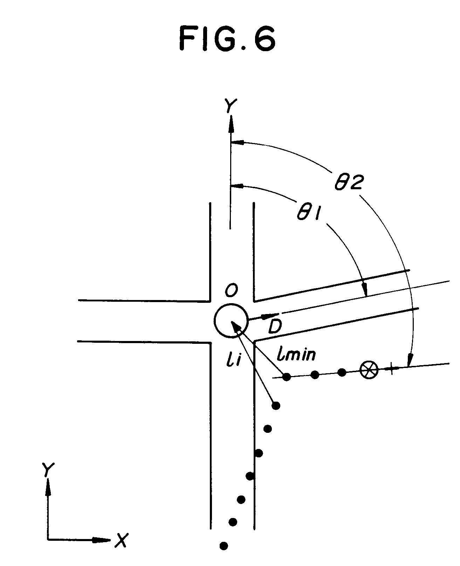

The apparatus according to the present invention may be modified from that illustrated in Fig. 4. In this embodiment, at the time of setting the target point O on the map displayed on the display screen, a desired running direction D of the vehicle at the target point is also set using the manual operating unit 8, as shown in Fig. 6. The decision that the vehicle has passed through the target point is then made not only on the basis of the closest approach distance of the vehicle relative to the target point O, as described above, but also on the basis of the relation between the actually detected running direction of the vehicle at the closest approach and the desired running direction D. The data concerning the angle ϑ of the set running direction D relative to the Y axis is registered in the internal memory of the signal processing unit 3.

A decision that the vehicle has passed through the target may then be made on the basis of the closest approaching distance and the relationship between the actual detected running direction and the set desired running direction D, and may be carried out by the following process. At the time when it has been decided that the closest approach lmin of the vehicle to the target O is within the predetermined distance K, as described above, a difference |ϑ1 - ϑ2| between the angle ϑ1 of the running direction D set at the target O and the angle ϑ2 of the actually detected running direction is obtained, and compared with a predetermined angle ψ (for example 30°) which has been previously set. It is decided that the vehicle has passed through the target when |ϑ1 - ϑ2| < ψ.

The angle ϑ2 of the actual running direction of the vehicle can be decided on the basis of the coordinate data (x1, y1) of the position of the vehicle closest to the target O and the coordinate data (xi,yi) of the position of the vehicle at a time after it has been decided that the shortest distance lmin is less than the predetermined distance K, according to the following formula:$\text{ϑ2=90° - tan⁻¹ {(yi-yl)/(xi-xl)}}$

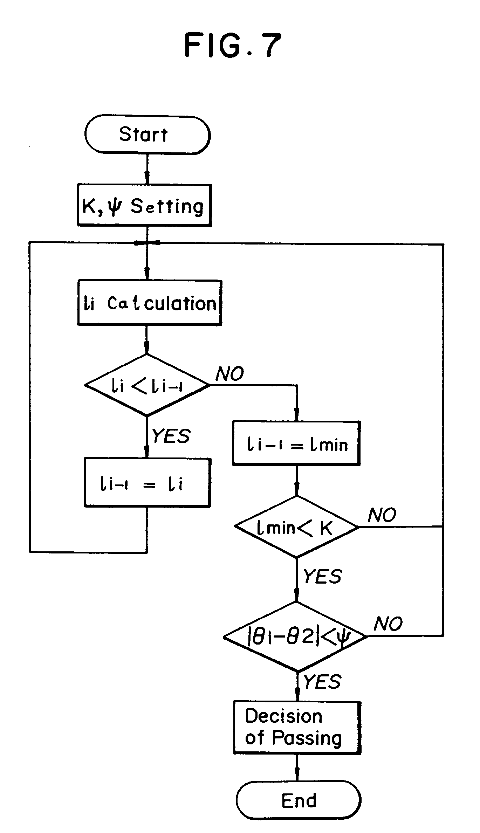

Fig. 7 is a flow chart showing the decision process in this case.

According to this embodiment, the decision is made on the basis of whether the shortest distance lmin between the vehicle and the target O is less than the predetermined distance K or not, and whether the running direction of the vehicle at this moment substantially coincides with the previously set desired running direction D or not. Thus, it is possible to decide more certainly whether the vehicle has passed through the target. Furthermore, the guidance of the vehicle from the starting point to the destination can be improved, by setting the mark indicating the running direction D, at which the vehicle is to advance.

In a further embodiment of the present invention, once it has been decided by the signal processing unit 3 that the closest approach lmin of the vehicle to the target O is within the predetermined distance K, as described above, the distance of travel d away from the closest position is then determined, and is compared with a predetermined distance L (for example, 100m). Only after it is confirmed that d > L, is it decided whether or not the vehicle has passed through the target, depending upon whether or not the above-mentioned condition |ϑ1 - ϑ2| < ψ is satisfied. The distance of travel d of the vehicle from the position closest to the target O is calculated on the basis of the coordinate data (xl, yl) of the closest position and the coordinate data (xi, yi) of the current location of the vehicle, according to the formula:$\text{d=} \sqrt{\text{(xi-xl)² + (yi-yl)²}}$

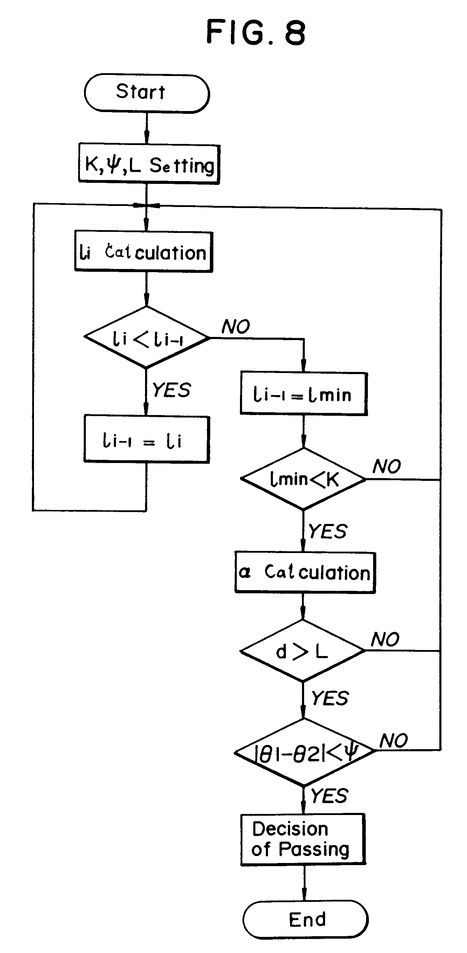

Fig. 8 is a flow chart showing the decision process in this case.

According to this embodiment, it is confirmed that the vehicle has travelled over a predetermined distance L from the closest position to the target point O, before the determination of the running direction of the vehicle. This is useful in a situation in which, for example, the vehicle turns around a roundabout at the target position, or enters into a service station to supply fuel at the target position, as the running direction is not calculated at this point but, more accurately, during steady running towards the next target. Thus, apparatus according to the present invention has the advantage that it is able to make an accurate decision as to whether a vehicle has passed through a target point, thereby providing optimum guidance for a vehicle running along a desired running course.

## Claims

1. A method of displaying the travel path of a moving body in a two dimensional coordinate system, comprising the steps of:
displaying a map in said two dimensional coordinate system;
setting at least one target point on a desired running course on the map, the or each target point having a predetermined distance associated therewith;
successively calculating the current location of the moving body in the two-dimensional coordinate system on the basis of the actually detected position of the moving body;
displaying on said map the calculated current location of the moving body;
the method further comprising determining whether the moving body has correctly passed through a target point on said desired running course by, as the moving body approaches the target point:
successively calculating the distance of the moving body from the target point;
determining the minimum distance of the body from the target point by a comparison of the successive calculated distances from the target point until the moving body begins to move away from the target point;
comparing the minimum distance of the body from the target point with said predetermined distance; and
determining that the body has passed through the target point when the determined minimum distance of the moving body from the target point is less than the predetermined distance.

2. A method of displaying the travel path of a moving body in a two dimensional coordinate system, comprising the steps of:
displaying a map in said two dimensional coordinate system;
setting at least one target point on a desired running course on the map, the or each target point having a predetermined distance associated therewith;
setting a desired running direction at the or each target point;
successively calculating the current location of the moving body in the two-dimensional coordinate system on the basis of the actually detected position of the moving body;
displaying on said map the calculated current location of the moving body;
the method further comprising determining whether the moving body has correctly passed through a target point on said desired running course by, as the moving body approaches the target point:
successively calculating the distance of the moving body from the target point;
determining the minimum distance of the body from the target point by a comparison of the successive calculated distances from the target point until the moving body begins to move away from the target point;
comparing said minimum distance of the body from the target point with said predetermined distance;
calculating a difference angle between the direction of travel of the moving body calculated on the basis of the actually detected direction of travel and the desired running direction;
comparing said difference angle with a predetermined angle; and
determining that the body has passed through the target point when the determined minimum distance of the moving body from the target point is less than the predetermined distance, and the difference angle is less than the predetermined angle.

3. A method as claimed in claim 2, wherein the direction of travel of the body is calculated when the moving body has travelled a second predetermined distance after said minimum distance is detected.

4. An apparatus for displaying a travel path of a moving body in a two-dimensional coordinate system, the apparatus comprising:
means for displaying a map in said two-dimensional coordinate system;
means for setting at least one target point on a desired running course on the map, the or each target point having a predetermined distance associated therewith;
means for successively calculating a current location of the moving body in the two-dimensional coordinate system on the basis of the actually detected position of the moving body;
the apparatus operating such that:
the calculated current location of the moving body is displayed on the map; and such that:
it is determined whether the moving body has correctly passed through a target point on said desired running course by, as the moving body approaches the target point:
successively calculating the distance of the moving body from the target point;
determining the minimum distance of the body from the target point by a comparison of the successive calculated distances from the target point until the moving body begins to move away from the target point;
comparing the minimum distance of the body from the target point with said predetermined distance; and
determining that the body has passed through the target point when the determined minimum distance of the moving body from the target point is less than the predetermined distance.

5. An apparatus for displaying a travel path of a moving body in a two-dimensional coordinate system, the apparatus comprising:
means for displaying a map in said two-dimensional coordinate system;
means for setting at least one target point on a desired running course on the map, the or each target point having a predetermined distance associated therewith;
means for setting a desired running direction of the moving body at the or each target point;
means for successively calculating a current location of the moving body in the two-dimensional coordinate system on the basis of the actually detected position of the moving body;
means for successively calculating the direction of travel of the moving body on the basis of the actually detected direction of travel of the moving body;
the apparatus operating such that:
the calculated current location of the moving body is displayed on the map; and such that:
it is determined whether the moving body has correctly passed through a target point on said desired running course by, as the moving body approaches the target point:
successively calculating the distance of the moving body from the target point;
determining the minimum distance of the body from the target point by a comparison of the successive calculated distances from the target point until the moving body begins to move away from the target point;
comparing the minimum distance of the body from the target point with said predetermined distance;
calculating a difference angle between a calculated direction of travel of the moving body and the desired running direction;
comparing the difference angle with a predetermined angle; and
determining that the body has passed through the target point when the determined minimum distance of the moving body from the target point is less than the predetermined distance and the difference angle is less than the predetermined angle.

6. An apparatus for displaying a travel path of a moving body according to claim 5 in which the determination is made as to whether the moving body has passed through the target point when the moving body has travelled for a second predetermined distance after it has begun to move away from the target point.

## Patentansprüche

1. Verfahren zum Darstellen des Bewegungspfads eines sich bewegenden Körpers in einem zweidimensionalen Koordinatensystem, umfassend die Schritte:
Darstellen einer Landkarte im zweidimensionalen Koordinatensystem;
Festlegen von mindestens einem Zielpunkt auf einer gewünschten Wegstrecke auf der Landkarte, wobei mit dem Zielpunkt oder mit jedem Zielpunkt eine vorbestimmte Entfernung verknüpft ist;
fortlaufendes Berechnen des momentanen Orts des sich bewegenden Körpers im zweidimensionalen Koordinatensystem, ausgehend von der tatsächlich festgestellten Position des sich bewegenden Körpers;
Anzeigen des momentanen berechneten Ortes des sich bewegenden Körpers auf der Landkarte;
wenn der sich bewegende Körper dem Zielpunkt näherkommt, umfaßt das Verfahren ferner die Feststellung, ob der sich bewegende Körper auf der gewünschten Wegstrecke korrekt durch einen Zielpunkt gelaufen ist, und zwar durch die Schritte:
fortgesetztes Berechnen des Abstands des sich bewegenden Körpers vom Zielpunkt;
Feststellen des Mindestabstands des Körpers vom Zielpunkt durch einen Vergleich der fortgesetzt berechneten Abstände vom Zielpunkt, bis der sich bewegende Körper beginnt, sich vom Zielpunkt zu entfernen;
Vergleichen des Mindestabstands des Körpers vom Zielpunkt mit dem vorbestimmten Abstand; und
Feststellen, daß der Körper durch den Zielpunkt gegangen ist, wenn der festgestellte Mindestabstand des sich bewegenden Körpers vom Zielpunkt kleiner ist als der vorbestimmte Abstand.

2. Verfahren zum Darstellen des Bewegungspfads eines sich bewegenden Körpers in einem zweidimensionalen Koordinatensystem, umfassend die Schritte:
Darstellen einer Landkarte im zweidimensionalen Koordinatensystem;
Festlegen von mindestens einem Zielpunkt auf einer gewünschten Wegstrecke auf der Landkarte, wobei mit dem Zielpunkt oder mit jedem Zielpunkt eine vorbestimmte Entfernung verknüpft ist;
Festlegen einer gewünschten Bewegungsrichtung am Zielpunkt bzw. an jedem Zielpunkt;
fortlaufendes Berechnen des momentanen Orts des sich bewegenden Körpers im zweidimensionalen Koordinatensystem, ausgehend von der tatsächlich festgestellten Position des sich bewegenden Körpers;
Anzeigen des momentanen berechneten Ortes des sich bewegenden Körpers auf der Landkarte;
wenn der sich bewegende Körper dem Zielpunkt näherkommt, umfaßt das Verfahren ferner die Feststellung, ob der sich bewegende Körper auf der gewünschten Wegstrecke korrekt durch einen Zielpunkt gelaufen ist, und zwar durch die Schritte:
fortgesetztes Berechnen des Abstands des sich bewegenden Körpers vom Zielpunkt;
Feststellen des Mindestabstands des Körpers vom Zielpunkt durch einen Vergleich der fortgesetzt berechneten Abstände vom Zielpunkt, bis der sich bewegende Körper beginnt, sich vom Zielpunkt zu entfernen;
Vergleichen des Mindestabstands des Körpers vom Zielpunkt mit dem vorbestimmten Abstand;
Berechnen des Zwischenwinkels zwischen der Bewegungsrichtung des sich bewegenden Körpers, berechnet ausgehend von der tatsächlich festgestellten Bewegungsrichtung und der gewünschten Bewegungsrichtung;
Vergleichen des Zwischenwinkels mit einem vorbestimmten Winkel; und
Feststellen, daß der Körper durch den Zielpunkt gegangen ist, wenn der festgestellte Mindestabstand des sich bewegenden Körpers vom Zielpunkt kleiner ist als der vorbestimmte Abstand und der Zwischenwinkel kleiner ist als der vorbestimmte Winkel.

3. Verfahren nach Anspruch 2, wobei die Bewegungsrichtung des Körpers berechnet wird, wenn der sich bewegende Körper eine zweite vorbestimmte Entfernung zurückgelegt hat, nachdem der Mindestabstand festgestellt wurde.

4. Vorrichtung zum Darstellen des Bewegungspfads eines sich bewegenden Körpers in einem zweidimensionalen Koordinatensystem, wobei die Vorrichtung umfaßt:
eine Einrichtung zum Darstellen einer Landkarte im zweidimensionalen Koordinatensystem;
eine Einrichtung zum Festlegen von mindestens einem Zielpunkt auf einer gewünschten Wegstrecke auf der Landkarte, wobei mit dem Zielpunkt oder mit jedem Zielpunkt eine vorbestimmte Entfernung verknüpft ist;
eine Einrichtung zum fortlaufenden Berechnen des momentanen Orts des sich bewegenden Körpers im zweidimensionalen Koordinatensystem, ausgehend von der tatsächlich festgestellten Position des sich bewegenden Körpers;
wobei die Vorrichtung so arbeitet, daß:
der momentane berechnete Ort des sich bewegenden Körpers auf der Landkarte dargestellt wird; und so, daß:
festgestellt wird, ob der sich bewegende Körper korrekt durch den Zielpunkt auf der gewünschten Wegstrecke gegangen ist, und zwar durch:
das fortgesetzte Berechnen des Abstands des sich bewegenden Körpers vom Zielpunkt;
das Feststellen des Mindestabstands des Körpers vom Zielpunkt durch einen Vergleich der fortgesetzt berechneten Abstände vom Zielpunkt, bis der sich bewegende Körper beginnt, sich vom Zielpunkt zu entfernen;
das Vergleichen des Mindestabstands des Körpers vom Zielpunkt mit dem vorbestimmten Abstand; und
das Feststellen, daß der Körper durch den Zielpunkt gegangen ist, wenn der festgestellte Mindestabstand des sich bewegenden Körpers vom Zielpunkt kleiner ist als der vorbestimmte Abstand.

5. Vorrichtung zum Darstellen des Bewegungspfads eines sich bewegenden Körpers in einem Zweidimensionalen Koordinatensystem, wobei die Vorrichtung umfaßt:
eine Einrichtung zum Darstellen einer Landkarte im Zweidimensionalen Koordinatensystem;
eine Einrichtung zum Festlegen von mindestens einem Zielpunkt auf einer gewünschten Wegstrecke auf der Landkarte, wobei mit dem Zielpunkt oder mit jedem Zielpunkt eine vorbestimmte Entfernung verknüpft ist;
eine Einrichtung zum Festlegen einer gewünschten Bewegungsrichtung des sich bewegenden Körpers am Zielpunkt oder an jedem Zielpunkt;
eine Einrichtung zum fortlaufenden Berechnen des momentanen Orts des sich bewegenden Körpers im zweidimensionalen Koordinatensystem, ausgehend von der tatsächlich festgestellten Position des sich bewegenden Körpers;
eine Einrichtung zum fortlaufenden Berechnen der Bewegungsrichtung des sich bewegenden Körpers, ausgehend von der tatsächlich festgestellten Bewegungsrichtung des sich bewegenden Körpers;
wobei die Vorrichtung so arbeitet, daß:
der momentane berechnete Ort des sich bewegenden Körpers auf der Landkarte dargestellt wird; und so, daß:
festgestellt wird, ob der sich bewegende Körper auf der gewünschten Wegstrecke korrekt durch den Zielpunkt gegangen ist, wenn der sich bewegende Körper dem Zielpunkt näherkommt, und zwar durch:
das fortgesetzte Berechnen des Abstands des sich bewegenden Körpers vom Zielpunkt;
das Feststellen des Mindestabstands des Körpers vom Zielpunkt durch einen Vergleich der fortgesetzt berechneten Abstände vom Zielpunkt, bis der sich bewegende Körper beginnt, sich vom Zielpunkt zu entfernen;
das Vergleichen des Mindestabstands des Körpers vom Zielpunkt mit dem vorbestimmten Abstand;
das Berechnen eines Zwischenwinkels zwischen einer berechneten Bewegungsrichtung des sich bewegenden Körpers und der gewünschten Bewegungsrichtung;
das Vergleichen des Zwischenwinkels mit einem vorbestimmten Winkel; und
das Feststellen, daß der Körper durch den Zielpunkt gegangen ist, wenn der festgestellte Mindestabstand des sich bewegenden Körpers vom Zielpunkt kleiner ist als der vorbestimmte Abstand und der Zwischenwinkel kleiner ist als der vorbestimmte Winkel.

6. Vorrichtung zum Anzeigen eines Bewegungspfads eines sich bewegenden Körpers nach Anspruch 5, wobei festgestellt wird, ob der sich bewegende Körper durch den Zielpunkt gegangen ist, wenn der sich bewegende Körper eine zweite vorbestimmte Entfernung zurückgelegt hat, nachdem er begonnen hat, sich vom Zielpunkt zu entfernen.

## Revendications

1. Procédé d'affichage de la trajectoire de déplacement d'un corps mobile dans un système de coordonnées à deux dimensions, comprenant les étapes consistant à:
afficher une carte dans ledit système de coordonnées à deux dimensions ;
fixer au moins un point cible sur un parcours souhaité sur la carte, le ou les point(s) cible(s) étant associé(s) à une distance prédéterminée ;
calculer successivement une position courante du corps mobile dans le système de coordonnées à deux dimensions sur la base de la position du corps mobile effectivement détectée ;
afficher sur ladite carte la position courante calculée du corps mobile ;
le procédé comprenant de plus le fait de déterminer si le corps mobile est correctement passé par un point cible sur ledit parcours souhaité, en, lorsque le corps mobile approche du point cible:
calculant successivement la distance séparant le corps mobile du point cible ;
déterminant la distance minimale séparant le corps du point cible par une comparaison des distances successives calculées depuis le point cible jusqu'à ce que le corps mobile commence à s'éloigner du point cible ;
comparant la distance minimale séparant le corps du point cible avec ladite distance prédéterminée ; et en
déterminant que le corps est passé par le point cible lorsque la distance minimale déterminée séparant le corps mobile du point cible est inférieure à la distance prédéterminée.

2. Procédé d'affichage de la trajectoire de déplacement d'un corps mobile dans un système de coordonnées à deux dimensions, comprenant les étapes consistant à:
afficher une carte dans ledit système de coordonnées à deux dimensions ;
fixer au moins un point cible sur un parcours souhaité sur la carte, le ou les point(s) cible(s) étant associé(s) à une distance prédéterminée ;
fixer une direction de déplacement souhaitée au niveau du ou des point(s) cible(s) ;
calculer successivement la position courante du corps mobile dans le système de coordonnées à deux dimensions sur la base de la position du corps mobile effectivement détectée ;
afficher sur ladite carte la position courante calculée du corps mobile ;
le procédé comprenant de plus le fait de déterminer si le corps mobile est correctement passé par un point cible sur ledit parcours souhaité, en, lorsque le corps mobile approche du point cible:
calculant successivement la distance séparant le corps mobile du point cible ;
déterminant la distance minimale séparant le corps du point cible par une comparaison des distances successives calculées depuis le point cible jusqu'à ce que le corps mobile commence à s'éloigner du point cible ;
comparant ladite distance minimale séparant le corps du point cible avec ladite distance prédéterminée ;
calculant une différence angulaire entre la direction de déplacement du corps mobile calculée sur la base de la direction de déplacement effectivement détectée et la direction de déplacement souhaitée ;
comparant ladite différence angulaire avec un angle prédéterminé; et en
déterminant que le corps est passé par le point cible lorsque la distance minimale déterminée séparant le corps mobile du point cible est inférieure à la distance prédéterminée et lorsque la différence angulaire est inférieure à l'angle prédéterminé.

3. Procédé selon la revendication 2, dans lequel la direction de déplacement du corps est calculée lorsque le corps mobile s'est déplacé d'une deuxième distance prédéterminée après que ladite distance minimale a été détectée.

4. Dispositif d'affichage de la trajectoire de déplacement d'un corps mobile dans un système de coordonnées à deux dimensions, le dispositif comprenant:
un moyen pour afficher une carte dans ledit système de coordonnées à deux dimensions ;
un moyen pour fixer au moins un point cible sur un parcours souhaité sur la carte, le ou les point(s) cible(s) étant associé(s) à une distance prédéterminée ;
un moyen pour calculer successivement une position courante du corps mobile dans le système de coordonnées à deux dimensions sur la base de la position du corps mobile effectivement détectée ;
le dispositif fonctionnant de manière que:
la position courante calculée du corps mobile soit affichée sur la carte ; et de manière que:
on détermine si le corps mobile est correctement passé par un point cible sur ledit parcours souhaité, en, lorsque le corps mobile approche du point cible:
calculant successivement la distance séparant le corps mobile du point cible ;
déterminant la distance minimale séparant le corps du point cible par une comparaison des distances successives calculées depuis le point cible jusqu'à ce que le corps mobile commence à s'éloigner du point cible ;
comparant la distance minimale séparant le corps du point cible avec ladite distance prédéterminée ; et en
déterminant que le corps est passé par le point cible lorsque la distance minimale déterminée séparant le corps mobile du point cible est inférieure à la distance prédéterminée.

5. Dispositif d'affichage de la trajectoire de déplacement d'un corps mobile dans un système de coordonnées à deux dimensions, le dispositif comprenant:
un moyen pour afficher une carte dans ledit système de coordonnées à deux dimensions ;
un moyen pour fixer au moins un point cible sur un parcours souhaité sur la carte, le ou les point(s) cible(s) étant associé(s) à une distance prédéterminée ;
un moyen pour fixer une direction de déplacement souhaitée au niveau du ou des point(s) cible(s) ;
un moyen pour calculer successivement une position courante du corps mobile dans le système de coordonnées à deux dimensions sur la base de la position du corps mobile effectivement détectée ;
un moyen pour calculer successivement la direction de déplacement du corps mobile sur la base de la direction de déplacement effectivement détectée du corps mobile ;
le dispositif fonctionnant de manière que:
la position courante calculée du corps mobile soit affichée sur la carte ; et de manière que:
on détermine si le corps mobile est correctement passé par un point cible sur ledit parcours souhaité, en, lorsque le corps mobile approche du point cible:
calculant successivement la distance séparant le corps mobile du point cible ;
déterminant la distance minimale séparant le corps du point cible par une comparaison des distances successives calculées depuis le point cible jusqu'à ce que le corps mobile commence à s'éloigner du point cible ;
comparant ladite distance minimale séparant le corps du point cible avec ladite distance prédéterminée ;
calculant une différence angulaire entre la direction de déplacement calculée du corps mobile et la direction de déplacement souhaitée ;
comparant ladite différence angulaire avec un angle prédéterminé; et en
déterminant que le corps est passé par le point cible lorsque la distance minimale déterminée séparant le corps mobile du point cible est inférieure à la distance prédéterminée et lorsque la différence angulaire est inférieure à l'angle prédéterminé.

6. Dispositif d'affichage de la trajectoire de déplacement d'un corps mobile selon la revendication 5, dans lequel la détermination est faite de savoir si le corps mobile est passé par le point cible lorsque le corps mobile s'est déplacé d'une deuxième distance prédéterminée après qu'il a commencé à s'éloigner du point cible.
